(19) Europäisches Patentamt / European Patent Office / Office européen des brevets

(11) **EP 4 773 237 A1**

(12) **EUROPEAN PATENT APPLICATION**
published in accordance with Art. 153(4) EPC

(43) Date of publication:
08.07.2026 Bulletin 2026/28

(21) Application number: 23954013.1

(22) Date of filing: 07.12.2023

(51) International Patent Classification (IPC):
$H01M\ 4/505^{(2010.01)}$    $H01M\ 4/525^{(2010.01)}$
$H01M\ 4/485^{(2010.01)}$    $H01M\ 4/62^{(2006.01)}$
$H01M\ 4/131^{(2010.01)}$    $H01M\ 10/052^{(2010.01)}$
$H01M\ 10/42^{(2006.01)}$    $C01G\ 49/00^{(2006.01)}$
$C01G\ 51/00^{(2025.01)}$    $C01B\ 32/15^{(2017.01)}$
$B82Y\ 40/00^{(2011.01)}$    $B82Y\ 30/00^{(2011.01)}$

(52) Cooperative Patent Classification (CPC):
Y02E 60/10

(86) International application number:
PCT/CN2023/137215

(87) International publication number:
WO 2025/065880 (03.04.2025 Gazette 2025/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 28.09.2023 CN 202311281693

(71) Applicant: Huizhou EVE Power Co., Ltd
Tonghu Town, Zhongkai High-tech District
Huizhou, Guangdong 516039 (CN)

(72) Inventors:
• LI, Si
Guangdong 516039 (CN)

• HU, Qi
Guangdong 516039 (CN)
• ZENG, Hanmin
Guangdong 516039 (CN)
• HE, Wei
Guangdong 516039 (CN)
• LI, Si
Guangdong 516039 (CN)

(74) Representative: Zhu, Puxing
Mars Universe IP
c/o Spaces
Mühldorfstraße 8
81671 München (DE)

(54) **LITHIUM-SUPPLEMENTING ADDITIVE AND PREPARATION METHOD THEREFOR, POSITIVE ELECTRODE MATERIAL, POSITIVE ELECTRODE SHEET, AND BATTERY**

(57) The present application relates to the field of lithium battery technologies, and in particular, to a lithium-supplementing additive, and a method for preparing the same, a positive electrode material, a positive electrode plate, and a battery. The lithium-supplementing additive includes a lithium-containing compound, and the lithium-containing compound is selected from the group consisting of compounds represented by the following chemical formula (I): $aLiFe_\alpha Mn_\beta M_{1-\alpha-\beta}O_{2-\gamma}X_\gamma \cdot (1-a)Li_2 Fe_\delta Mn_\varepsilon N_{1-\delta-\varepsilon}O_{3-\eta}X_\eta$, where M and N are each independently selected from a group consisting of Zr, Co, Sr, Al, Ni, W, Ti, Cu, Mg, Zn, Ca, Ba, Sc, Ga, Y, La, In, Ce, Ge, Hf, Sn, Nb, Ta, V, and Sb, and X is fluorine (F); $0.4 \leq a \leq 0.9$, $0 < \alpha \leq 1$, $0 \leq \beta \leq 1$, $0 < (\alpha+\beta) \leq 1$, $0 \leq \gamma \leq 0.1$, $0 < \delta \leq 1$, $0 \leq \varepsilon \leq 1$, $0 < (\delta+\varepsilon) \leq 1$, and $0 \leq \eta \leq 0.1$. The lithium-supplementing additive provided in the present application can achieve stable and uniform lithium supplementation and enhance cycling stability.

EP 4 773 237 A1

**XRD Pattern**

FIG. 1

**Description**

This application claims priority to and the benefit of Chinese Patent Application No. 202311281693.1, filed with the China National Intellectual Property Administration on Sep. 28, 2023, the disclosure of which is incorporated herein by reference in its entirety.

TECHNICAL FIELD

The present application relates to the field of lithium battery technologies, and in particular, to a lithium-supplementing additive, and a method for preparing the same, a positive electrode material, a positive electrode plate, and a lithium-ion battery.

BACKGROUND

Phosphate-based positive electrode materials have garnered significant attention due to their advantages such as good safety performance and long cycle life. However, they still exhibit several shortcomings in practical applications. Currently, phosphate-based positive electrode materials face the problem of rapid capacity decay during the early stages of room-temperature cycling. The primary reason for this is the instability of the negative electrode SEI film in the early stages. The continuous repair and formation of the SEI film consume the active lithium released from the positive electrode, leading to an increase in the irreversible capacity of the positive electrode and consequently causing faster early cycle decay. To reduce the early-stage active lithium loss in phosphate-based positive electrode materials, it is necessary to introduce lithium-supplementing additives into the positive electrode formulation to compensate for the loss of active lithium.

TECHNICAL PROBLEM

The present application provides a lithium-supplementing additive, a method for preparing the same, a positive electrode material, a positive electrode plate, and a lithium-ion battery, aimed at addressing a technical problem of instability in the lithium-rich phase structure of lithium-supplementing materials.

TECHNICAL SOLUTIONS

In a first aspect, the present application provides a lithium-supplementing additive, which includes a lithium-containing compound, and the lithium-containing compound is selected from the group consisting of compounds represented by the following chemical formula (I):

$$a\text{LiFe}_{\alpha}\text{Mn}_{\beta}\text{M}_{1-\alpha-\beta}\text{O}_{2-\gamma}\text{X}_{\gamma} \cdot (1-a)\text{Li}_2\text{Fe}_{\delta}\text{MnN}_{1-\delta-\varepsilon}\text{O}_{3-\eta}\text{X}_{\eta} \qquad \text{(I)};$$

where M and N are each independently selected from a group consisting of Zr, Co, Sr, Al, Ni, W, Ti, Cu, Mg, Zn, Ca, Ba, Sc, Ga, Y, La, In, Ce, Ge, Hf, Sn, Nb, Ta, V, and Sb, and X is fluorine (F); $0.4 \leq a \leq 0.9$, $0 < \alpha \leq 1$, $0 \leq \beta \leq 1$, $0 < (\alpha+\beta) \leq 1$, $0 \leq \gamma \leq 0.1$, $0 < \delta \leq 1$, $0 \leq \varepsilon \leq 1$, $0 < (\delta+\varepsilon) \leq 1$, and $0 \leq \eta \leq 0.1$;
the lithium-supplementing additive has a surface alkalinity of 10 $\mu\text{mol·g}^{-1}$ to 400 $\mu\text{mol·g}^{-1}$.

In a second aspect, the present application provides a method for preparing a lithium-supplementing additive, including the following steps:

preparing a precursor material using a spray pyrolysis treatment; and
mixing the precursor material with a lithium source and performing a calcination treatment to obtain a lithium-containing compound;
where the lithium-supplementing additive includes a lithium-containing compound, and the lithium-containing compound is selected from the group consisting of compounds represented by the following chemical formula (I):

$$a\text{LiFe}_{\alpha}\text{Mn}_{\beta}\text{M}_{1-\alpha-\beta}\text{O}_{2-\gamma}\text{X}_{\gamma} \cdot (1-a)\text{Li}_2\text{Fe}_{\delta}\text{Mn}_{\varepsilon}\text{N}_{1-\delta-\varepsilon}\text{O}_{3-\eta}\text{X}_{\eta} \qquad \text{(I)};$$

where M and N are each independently selected from a group consisting of Zr, Co, Sr, Al, Ni, W, Ti, Cu, Mg, Zn, Ca, Ba, Sc, Ga, Y, La, In, Ce, Ge, Hf, Sn, Nb, Ta, V, and Sb, and X is fluorine (F); $0.4 \leq a \leq 0.9$, $0 < \alpha \leq 1$, $0 \leq \beta \leq 1$, $0 < (\alpha+\beta) \leq 1$, $0 \leq \gamma \leq 0.1$, $0 < \delta \leq 1$, $0 \leq \varepsilon \leq 1$, $0 < (\delta+\varepsilon) \leq 1$, and $0 \leq \eta \leq 0.1$;

In a third aspect, the present application provides a positive electrode material, which includes a positive electrode active material and the above-mentioned lithium-supplementing additive.

In a fourth aspect, the present application provides a positive electrode plate, which includes the above-mentioned lithium-supplementing additive.

In a fifth aspect, the present application provides a battery, which includes the above-mentioned positive electrode plate.

BENEFICIAL EFFECTS

The beneficial effects of the present application are as follows:

The lithium-supplementing additive provided the present application includes a lithium-containing compound. By introducing a significant amount of iron elements into this lithium-containing compound, costs are reduced. Additionally, due to the unique controllable redox reversibility of $Fe^{3+}/Fe^{4+}$, it can provide more active lithium required by the negative electrode, achieving efficient lithium supplementation in the first cycle and obtaining optimal lithium supplementation effects.

Specifically, the lithium-containing compound of the present application consists of two phases: $LiFe_\alpha Mn_\beta M_{1-\alpha-\beta}O_{2-\gamma}X_\gamma$ and $Li_2Fe_\delta Mn_\varepsilon N_{1-\delta-\varepsilon}O_{3-\eta}X_\eta$. The lithium-rich phase $Li_2Fe_\delta Mn_\varepsilon N_{1-\delta-\varepsilon}O_{3-\eta}X_\eta$, during the first high-voltage charge, exhibits low initial coulombic efficiency due to irreversible oxygen release and the unique controllable redox reversibility of $Fe^{3+}/Fe^{4+}$, providing more active lithium required by the negative electrode. Meanwhile, the $LiFe_\alpha Mn_\beta M_{1-\alpha-\beta}O_{2-\gamma}X_\gamma$ phase, due to the unique controllable redox reversibility of $Fe^{3+}/Fe^{4+}$, not only provides part of the active lithium required by the negative electrode but also offers considerable reversible capacity. It also helps stabilize the structure of the lithium-rich phase. The combination of these two phases not only achieves excellent lithium supplementation effects but also allows the material itself to contribute capacity in subsequent cycles, reducing the decrease in energy density caused by the introduction of additives.

BRIEF DESCRIPTION OF THE DRAWINGS

To more clearly illustrate the technical solutions in the embodiments of the present application or the related art, a brief introduction to the drawings used in the description of the embodiments or the related art is provided below. It is evident that the drawings described below represent some embodiments of the present application. For those skilled in the art, other drawings can be obtained based on these drawings without creative effort. In the following description, unless otherwise specified, the positional relationships described in the drawings are based on the orientation of the components as depicted in the illustrations.

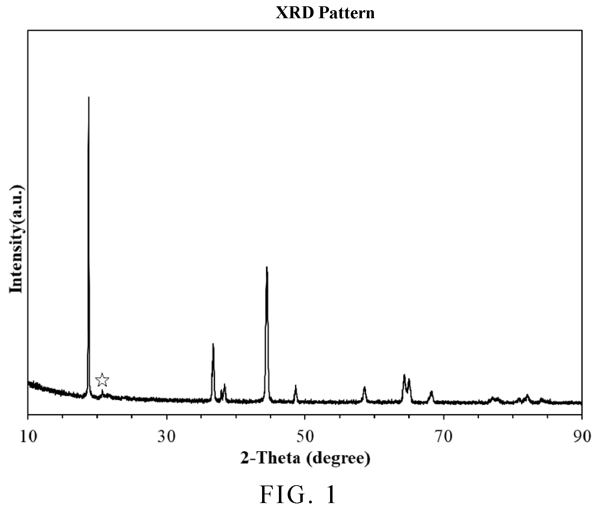

FIG. 1 is an XRD pattern of a lithium-supplementing additive prepared in Example 4 of the present application.

DETAILED DESCRIPTION

Example 1

This example provides a lithium-supplementing additive that includes a lithium-containing compound, with the chemical formula $0.7LiFeO_2 \cdot 0.3Li_2FeO_3$.

Preparation Method of the Lithium-Supplementing Additive:

Step S1: Dissolve and mix an iron source and a nucleation-promoting agent in deionized water at a molar ratio of 1:0.05 to obtain a mixed solution. The mixed solution is then pressurized through a two-fluid nozzle with a pore size of 2 $\mu$m to form spray droplets. These droplets are introduced into a pyrolysis reaction furnace at a flow rate of 20 L/min using a carrier gas, where they undergo high-temperature rapid pyrolysis to obtain a precursor material.

The iron source is ferric nitrate, the nucleation-promoting agent is ammonium nitrate, the carrier gas is nitrogen, and the spray pyrolysis reaction temperature is 950°C.

Step S2: Mix the obtained precursor material with a lithium source at a molar ratio of 1:1.3. After thorough mixing, calcine the mixture at 800°C for 10 hours in an oxygen-containing atmosphere to obtain the lithium-containing compound, which is the lithium-supplementing additive with the chemical formula $0.7LiFeO_2 \cdot 0.3Li_2FeO_3$.

The lithium source is lithium hydroxide. The lithium content of the lithium-containing compound is 9.0 wt%, with a particle size $D_v50$ of 800 nm and a specific surface area of 15 m$^2$/g. The pH value of the lithium-supplementing additive is 11.2, and the residual lithium content of the lithium-supplementing additive is 950 ppm.

Step S3: Mix the prepared lithium-supplementing additive with the phosphate-based positive electrode main material $LiFePO_4$ at a mass ratio of 1:9. Add a conductive agent (Super P) and a binder (PVDF) to prepare a composite positive electrode slurry. Use this slurry to coat and form a positive electrode plate, which is then paired with a negative electrode plate to form a lithium-ion battery. After activating the battery at a high voltage of 4.2V to 4.8V, test the cycling performance of the lithium-ion battery.

Example 2

This example provides a lithium-supplementing additive that includes a lithium-containing compound, with the chemical formula $0.6LiFeO_2 \cdot 0.4Li_2FeO_3$.

Preparation Method of the Lithium-Supplementing Additive:

Step S1: Dissolve and mix an iron source and a nucleation-promoting agent in deionized water at a molar ratio of 1:0.03 to obtain a mixed solution. The mixed solution is then pressurized through a two-fluid nozzle with a pore size of 5 $\mu$m to form spray droplets. These droplets are introduced into a pyrolysis reaction furnace at a flow rate of 10 L/min using a carrier gas, where they undergo high-temperature rapid pyrolysis to obtain a precursor material.

The iron source is ferric chloride, the nucleation-promoting agent is urea, the carrier gas is argon, and the spray pyrolysis reaction temperature is 780°C.

Step S2: Mix the obtained precursor material with a lithium source at a molar ratio of 1:1.4. After thorough mixing, calcine the mixture at 900°C for 12 hours in an oxygen-containing atmosphere, obtaining the lithium-containing compound with the chemical formula $0.6LiFeO_2 \cdot 0.4Li_2FeO_3$.

The lithium source is lithium hydroxide. The lithium content of the lithium-containing compound is 9.7 wt%, with a particle size $D_v50$ of 2 $\mu$m and a specific surface area of 8.3 $m^2/g$.

Step S3: Mix the obtained lithium-containing compound with a carbon source at a mass ratio of 1:0.01. Then, perform high-temperature heat treatment in an argon atmosphere to obtain the lithium-supplementing additive.

The carbon source is cyclodextrin. The carbon coating amount on the surface of the carbon source is 10,000 ppm. The pH value of the lithium-supplementing additive is 10.8, and the residual lithium content of the lithium-supplementing additive is 1,380 ppm.

Step S4: Mix the prepared lithium-supplementing additive with the phosphate-based positive electrode main material $LiFePO_4$ at a mass ratio of 10:90. Add a conductive agent (Super P) and a binder (PVDF) to prepare a composite positive electrode slurry. Use this slurry to coat and form a positive electrode plate, which is then paired with a negative electrode plate to obtain a lithium-ion battery. After activating the battery at a high voltage of 4.2V to 4.8V, test the cycling performance of the lithium-ion battery.

Example 3

This example is the same as Example 1, except for the following differences: In Step S1, the molar ratio of the iron source to the nucleation-promoting agent is 1:0.02; in Step S2, the molar ratio of the precursor material to the lithium source is 1:1.35. The resulting lithium-containing compound has the chemical formula $0.65LiFeO_2 \cdot 0.35Li_2FeO_3$.

Example 4

This example provides a lithium-supplementing additive that includes a lithium-containing compound, with the chemical formula $0.8LiFe_{0.42}Mn_{0.58}O_2 \cdot 0.2Li_2Fe_{0.6}Mn_{0.4}O_3$.

Preparation Method of the Lithium-Supplementing Additive:

Step 1: Dissolve and mix a manganese source, an iron source, and a nucleation-promoting agent in deionized water at a molar ratio of 1:0.838:0.025 to obtain a mixed solution. Control the concentration of manganese ions in the mixed solution to be 0.2 mol/L. Pressurize the mixed solution through a two-fluid nozzle with a pore size of 3 $\mu$m to form spray droplets. These droplets are then introduced into a pyrolysis reaction furnace at a flow rate of 20 L/min using a carrier gas, where they undergo high-temperature rapid pyrolysis to obtain a precursor material.

The manganese source is manganese sulfate, the iron source is ferric sulfate, the nucleation-promoting agent is urea, the carrier gas is helium, and the spray pyrolysis reaction temperature is 880°C.

Step S2: Mix the obtained precursor material with a lithium source at a molar ratio of 1:1.2. After thorough mixing, calcine the mixture at 900°C for 15 hours in an oxygen-containing atmosphere, obtaining the lithium-containing compound with the chemical formula $0.8LiFe_{0.42}Mn_{0.58}O_2 \cdot 0.2Li_2Fe_{0.6}Mn_{0.4}O_3$.

The lithium source is lithium acetate. The lithium content of the lithium-containing compound is 8.3 wt%, with a particle size $D_v50$ of 1 $\mu$m and a specific surface area of 12 $m^2/g$.

Step S3: Mix the obtained lithium-containing compound with a carbon source at a mass ratio of 1:0.02. Then, perform high-temperature heat treatment in a hydrogen atmosphere to obtain the lithium-supplementing additive.

The carbon source is sucrose. The carbon coating amount on the surface of the carbon source is 20,000 ppm. The pH value of the lithium-supplementing additive is 11.6, and the residual lithium content of the lithium-supplementing additive is 2,240 ppm.

Step S4: Mix the prepared lithium-supplementing additive with the phosphate-based positive electrode main material $LiFePO_4$ at a mass ratio of 10:90. Add a conductive agent (Super P) and a binder (PVDF) to prepare a composite positive electrode slurry. Use this slurry to coat and form a positive electrode plate, which is then paired with a negative electrode plate to obtain a lithium-ion battery. After activating the battery at a high voltage of 4.2V to 4.8V, test the cycling performance of the lithium-ion battery.

By conducting XRD testing on the product, as shown in FIG. 1, it can be determined that the peaks marked with an asterisk between 20° and 25° are characteristic peaks of the $Li_2Fe_\delta Mn_\varepsilon N_{1-\delta-\varepsilon}O_{3-\eta}X_\eta$ phase, which has a monoclinic structure with a space group of C2/m. All other diffraction peaks correspond to the $\alpha$-NaFeO$_2$ diffraction peaks, which represent the $LiFe_\alpha Mn_\beta M_{1-\alpha-\beta}O_{2-\gamma}X_\gamma$ phase, characterized by a layered structure with a space group of R-3m, similar to $\alpha$-NaFeO$_2$. This confirms that the synthesized material consists of two phases: $LiFe_\alpha Mn_\beta M_{1-\alpha-\beta}O_{2-\gamma}X_\gamma$ and $Li_2Fe_\delta Mn_\varepsilon N_{1-\delta-\varepsilon}O_{3-\eta}X_\eta$.

Example 5

This example is the same as Example 4, except that in Step S4, the positive electrode main material is lithium nickel cobalt manganese oxide.

Example 6

This example provides a lithium-supplementing additive that includes a lithium-containing compound, with the chemical formula $0.6LiFe_{0.68}Mn_{0.31}Al_{0.01}O_2 \cdot 0.4Li_2Fe_{0.45}Mn_{0.54}Al_{0.01}O_3$.

Preparation Method of the Lithium-Supplementing Additive:

Step 1: Dissolve and mix a manganese source, an iron source, an M source, an N source, and a nucleation-promoting agent in deionized water at a molar ratio of 1:1.463:0.0015:0.001:0.015 to obtain a mixed solution. Control the concentration of manganese ions in the mixed solution to be 0.1 mol/L. Pressurize the mixed solution through a two-fluid nozzle with a pore size of 4 $\mu$m to form spray droplets. These droplets are then introduced into a pyrolysis reaction furnace at a flow rate of 15 L/min using a carrier gas, where they undergo high-temperature rapid pyrolysis to obtain a precursor material.

The manganese source is manganese nitrate, the iron source is ferric nitrate, the M source is aluminum nitrate, the N source is aluminum acetate, and the nucleation-promoting agent is ammonium nitrate. The carrier gas is argon, and the spray pyrolysis reaction temperature is 920°C.

Step S2: Mix the obtained precursor material with a lithium source at a molar ratio of 1:1.4. After thorough mixing, calcine the mixture at 850°C for 18 hours in an oxygen-containing atmosphere, obtaining the lithium-containing compound with the chemical formula $0.6LiFe_{0.68}Mn_{0.31}Al_{0.01}O_2 \cdot 0.4Li_2Fe_{0.45}Mn_{0.54}Al_{0.01}O_3$.

The lithium source is lithium hydroxide. The lithium content of the lithium-containing compound is 9.7 wt%, with a particle size $D_v50$ of 4 $\mu$m and a specific surface area of 4.3 m$^2$/g.

Step S3: Mix the obtained lithium-containing compound with a carbon source at a mass ratio of 1:0.025. Then, perform high-temperature heat treatment in a nitrogen and argon atmosphere to obtain the lithium-supplementing additive.

The carbon source is starch. The carbon coating amount on the surface of the carbon source is 25,000 ppm. The pH value of the lithium-supplementing additive is 11.3, and the residual lithium content in the lithium-supplementing additive is 1,340 ppm.

Step S4: Mix the prepared lithium-supplementing additive with the phosphate-based positive electrode main material $LiMn_{0.7}Fe_{0.3}PO_4$ at a mass ratio of 17:83. Add a conductive agent (Super P) and a binder (PVDF) to prepare a composite positive electrode slurry. Use this slurry to coat and form a positive electrode plate, which is then paired with a negative electrode plate to obtain a lithium-ion battery. After activating the battery at a high voltage of 4.2V to 4.8V, test the cycling performance of the lithium-ion battery.

Example 7

This example provides a lithium-supplementing additive that includes a lithium-containing compound, with the chemical formula $0.7LiFe_{0.55}Mn_{0.43}Co_{0.02}O_{1.95}F_{0.05} \cdot 0.3Li_2Fe_{0.33}Mn_{0.65}Co_{0.02}O_{2.95}F_{0.05}$.

Preparation Method of the Lithium-Supplementing Additive:

Step 1: Dissolve and mix a manganese source, an iron source, an M source, an N source, an X source, and a nucleation-promoting agent in deionized water at a molar ratio of 1:0.976:0.028:0.012:0.101:0.035 to obtain a mixed solution. Control the concentration of manganese ions in the mixed solution to be 0.5 mol/L. Pressurize the mixed solution through a two-fluid nozzle with a pore size of 8 $\mu$m to form spray droplets. These droplets are then introduced into a pyrolysis reaction furnace at a flow rate of 25 L/min using a carrier gas, where they undergo high-temperature rapid pyrolysis to obtain a precursor material.
The manganese source is manganese acetate, the iron source is iron acetate, the M source is cobalt acetate, the N source is cobalt nitrate, the X source is $NH_4F$, and the nucleation-promoting agent is urea. The carrier gas is helium, and the spray pyrolysis reaction temperature is 780°C.
Step S2: Mix the obtained precursor material with a lithium source at a molar ratio of 1:1.3. After thorough mixing, calcine the mixture at 950°C for 12 hours in an oxygen-containing atmosphere, obtaining the lithium-containing compound with the chemical formula $0.7LiFe_{0.55}Mn_{0.43}Co_{0.02}O_{1.95}F_{0.05} \cdot 0.3Li_2Fe_{0.33}Mn_{0.65}Co_{0.02}O_{2.95}F_{0.05}$.
The lithium source is lithium acetate. The lithium content of the lithium-containing compound is 9.0 wt%, with a particle size $D_v50$ of 6 $\mu$m and a specific surface area of 1.8 $m^2$/g.
Step S3: Mix the obtained lithium-containing compound with a carbon source at a mass ratio of 1:0.015. Then, perform high-temperature heat treatment in a nitrogen atmosphere to obtain the lithium-supplementing additive.
The carbon source is polyvinyl alcohol. The carbon coating amount on the surface of the carbon source is 15,000 ppm. The pH value of the lithium-supplementing additive is 11.8, and the residual lithium content in the lithium-supplementing additive is 560 ppm.
Step S4: Mix the prepared lithium-supplementing additive with the phosphate-based positive electrode main material $LiFePO_4$ at a mass ratio of 28:72. Add a conductive agent (Super P) and a binder (PVDF) to prepare a composite positive electrode slurry. Use this slurry to coat and form a positive electrode plate, which is then paired with a negative electrode plate to obtain a lithium-ion battery. After activating the battery at a high voltage of 4.2V to 4.8V, test the cycling performance of the lithium-ion battery.

Example 8

This example is the same as Example 6, except that in Step S1: the M source is nickel sulfate, and the N source is zirconium sulfate. The chemical formula of the lithium-containing compound obtained is $0.6LiFe_{0.68}Mn_{0.31}Ni_{0.01}O_2 \cdot 0.4Li_2Fe_{0.45}Mn_{0.54}Zr_{0.01}O_3$.

Example 9

This example is the same as Example 6, except that in Step S1: the M source is zinc nitrate, and the N source is titanium nitrate. The chemical formula of the lithium-containing compound obtained is $0.6LiFe_{0.68}Mn_{0.31}Zn_{0.01}O_2 \cdot 0.4Li_2Fe_{0.45}Mn_{0.54}Ti_{0.01}O_3$.

Example 10

This example is the same as Example 6, except that in Step S1: the M source is cobalt acetate, and the N source is tantalum nitrate. The chemical formula of the lithium-containing compound obtained is $_{0.6}LiFe_{0.68}Mn_{0.31}Co_{0.01}O_2 \cdot 0.4Li_2Fe_{0.45}Mn_{0.54}Ta_{0.01}O_3$.

Example 11

This example is the same as Example 6, except that in Step S1: the M source is nickel nitrate, and the N source is lanthanum nitrate. The chemical formula of the lithium-containing compound obtained is $0.6LiFe_{0.68}Mn_{0.31}Ni_{0.01}O_2 \cdot 0.4Li_2Fe_{0.45}Mn_{0.54}La_{0.01}O_3$.

Example 12

This example is the same as Example 7, except that in Step S1: the M source is nickel sulfate, the N source is strontium nitrate, and the X source is $NH_4F$. The chemical formula of the lithium-containing compound obtained is $0.7LiFe_{0.55}Mn_{0.43}Ni_{0.02}O_{1.95}F_{0.05} \cdot 0.3Li_2Fe_{0.33}Mn_{0.65}Sr_{0.02}O_{2.95}F_{0.05}$.

Example 13

This example is the same as Example 7, except that in Step S1: the M source is aluminum sulfate, the N source is niobium nitrate, and the X source is LiF. The chemical formula of the lithium-containing compound obtained is $0.7LiFe_{0.55}Mn_{0.43}Al_{0.02}O_{1.95}F_{0.05} \cdot 0.3Li_2Fe_{0.33}Mn_{0.65}Nb_{0.02}O_{2.95}F_{0.05}$.

Example 14

This example is the same as Example 7, except that in Step S1: the M source is zirconium nitrate, the N source is zirconium sulfate, and the X source is $NH_4F$. The chemical formula of the lithium-containing compound obtained is $0.7LiFe_{0.55}Mn_{0.43}Zr_{0.02}O_{1.95}F_{0.05} \cdot 0.3Li_2Fe_{0.33}Mn_{0.65}Zr_{0.02}O_{2.95}F_{0.05}$.

Example 15

This example is the same as Example 7, except that in Step S1: the M source is magnesium chloride, the N source is tungsten nitrate, and the X source is LiF. The chemical formula of the lithium-containing compound obtained is $0.7LiFe_{0.55}Mn_{0.43}Mg_{0.02}O_{1.95}F_{0.05} \cdot 0.3Li_2Fe_{0.33}Mn_{0.65}W_{0.02}O_{2.95}F_{0.05}$.

Comparative Example 1

A composite positive electrode slurry is prepared using the phosphate-based positive electrode main material $LiFePO_4$, the conductive agent (Super P), and the binder (PVDF). This slurry is used to coat and obtain a positive electrode plate, which is then paired with a negative electrode plate to obtain a lithium-ion battery. After activation at a high voltage of 4.2V to 4.8V, the cycling performance of the lithium-ion battery is tested.

Comparative Example 2

A composite positive electrode slurry is prepared using the phosphate-based positive electrode main material $LiMn_{0.7}Fe_{0.3}PO_4$, the conductive agent (Super P), and the binder (PVDF). This slurry is used to coat and obtain a positive electrode plate, which is then paired with a negative electrode plate to obtain a lithium-ion battery. After activation at a high voltage of 4.2V to 4.8V, the cycling performance of the lithium-ion battery is tested.

Comparative Example 3

A composite positive electrode slurry is prepared using the lithium-supplementing additive $Li_5FeO_4$, the phosphate-based positive electrode main material $LiFePO_4$, the conductive agent (Super P), and the binder (PVDF). This slurry is used to coat and obtain a positive electrode plate, which is then paired with a negative electrode plate to obtain a lithium-ion battery. After activation at a high voltage of 4.2V to 4.8V, the cycling performance of the lithium-ion battery is tested.

Comparative Example 4

A composite positive electrode slurry is prepared using the lithium-supplementing additive $Li_5FeO_4$, the phosphate-based positive electrode main material $LiMn_{0.7}Fe_{0.3}PO_4$, the conductive agent (Super P), and the binder (PVDF). This slurry is used to coat and obtain a positive electrode plate, which is then paired with a negative electrode plate to obtain a lithium-ion battery. After activation at a high voltage of 4.2V to 4.8V, the cycling performance of the lithium-ion battery is tested.

Comparative Example 5

A composite positive electrode slurry is prepared using the lithium-supplementing additive $0.7Li_2MnO_3 \cdot 0.3LiMgO_2$, the phosphate-based positive electrode main material $LiFePO_4$, the conductive agent (Super P), and the binder (PVDF). This slurry is used to coat and obtain a positive electrode plate, which is then paired with a negative electrode plate to obtain a lithium-ion battery. After activation at a high voltage of 4.2V to 4.8V, the cycling performance of the lithium-ion battery is tested.

Comparative Example 6

A composite positive electrode slurry is prepared using the lithium-supplementing additive $0.7Li_2MnO_3 \cdot 0.3LiMgO_2$, the phosphate-based positive electrode main material $LiMn_{0.7}Fe_{0.3}PO_4$, the conductive agent (Super P), and the binder (PVDF). This slurry is used to coat and obtain a positive electrode plate, which is then paired with a negative electrode plate to obtain a lithium-ion battery. After activation at a high voltage of 4.2V to 4.8V, the cycling performance of the lithium-ion battery is tested.

It should be noted that the specific parameters or some commonly used reagents in the above examples are specific embodiments or preferred embodiments under the concept of the present application, and are not limited thereto. Those skilled in the art can make adaptive adjustments within the concept and scope of protection of the present application.

Test Example

The lithium-ion batteries prepared in the above examples and comparative examples are tested as follows:

Cycling Performance Test Method:

First, charge at a constant current of 0.1C to 4.6V, then discharge at a constant current of 0.1C to 2.5V. Subsequently, charge at a constant current and constant voltage of 0.5C to 4.2V, with a cutoff current of 0.02C. After resting for 1 hour, discharge at a constant current of 0.5C to 2.5V. Repeat the charge-discharge cycle between 2.5V and 4.2V for 500 cycles.

Surface Alkalinity Test Method:

First, under a vacuum of 0.01 Pa, heat the material to 1023K and thermally treat it for 2 hours to fully decompose $Li_2CO_3$ and LiOH on the material surface into $Li_2O$. Then, at 423K, use $CO_2$ as an acidic adsorption molecule and measure the adsorption amount of $CO_2$ using a heat-flow microcalorimeter. The adsorption amount is recorded as the surface alkalinity.

pH Value Test Method:

1. Place a 100 mL beaker on an electronic balance, tare it, and use a spatula to weigh 5.00 g of the lithium-supplementing additive sample into the beaker. Add a stirring bar and 50.00 g of pure water, then seal with sealing film.
2. Set the magnetic stirrer to a speed of 450 rpm and stir for 5 minutes. After stirring, filter using quantitative rapid filter paper and collect the filtrate for testing.
3. Turn on the pH meter, immerse the electrode in the homogeneous sample solution, and read and record the pH result of the sample.

Residual Lithium Content Test Method:

1. Fill a clean 250 mL Erlenmeyer flask with 250 mL of pure water, then seal the flask with sealing film. Place the sealed Erlenmeyer flask in a biochemical incubator at 25°C and maintain it at a constant temperature for 12 hours.

2. Weigh 5.0 g of the lithium-supplementing additive sample on weighing paper and transfer the weighed sample to a 250 mL beaker, recording the sample mass as m1. Place a magnetic stir bar into the beaker. Immediately remove the pure water from the biochemical incubator and weigh approximately 100 g of pure water into the beaker, recording the mass of the pure water as m2, then seal with sealing film.

3. Immediately place the beaker on a magnetic stirrer and stir at 600 rpm for 5 minutes. After stirring, vacuum filter the solution within 2 minutes until no visible solution remains on the filter membrane, obtaining the filtrate and recording the filtrate mass as m3.

4. Use 0.1 mol/L dilute hydrochloric acid as the titration solution for automatic potentiometric titration of the filtrate. As dilute hydrochloric acid is added, the pH of the solution gradually decreases. When the pH is between 6.5 and 9, the automatic potentiometric titrator will show a sudden change in electrode potential, marked as EP1. When the pH is between 3.5 and 5.5, another sudden change in electrode potential, marked as EP2, indicates the titration endpoint. The formula for calculating the residual lithium content (%) is as follows:

$$\text{Residual Lithium Content} = \frac{0.1*(2EP1-EP2)*6.941}{\dfrac{\text{Sample Mass}}{10}} + \frac{2*0.1*(EP2-EP1)*6.941}{\dfrac{\text{Sample Mass}}{10}} \ ;$$

$$\text{Sample Mass} = \frac{m1*m3}{m2} \ .$$

Table 1: Comparative Table of Electrochemical Performance of Batteries in Different Examples

| | Initial Coulombic Efficiency (%) | 500-Cycle Capacity Retention Rate (%) | Residual Lithium Content (ppm) | pH Value | Surface Alkalinity ($\mu$mol·g$^{-1}$) |
|---|---|---|---|---|---|
| Example 1 | 90.2% | 96.8% | 958 | 11.9 | 69 |
| Example 2 | 93.8% | 97.3% | 528 | 11.2 | 38 |
| Example 3 | 90.5% | 97.6% | 634 | 11.3 | 45 |
| Example 4 | 92.9% | 96.2% | 798 | 11.7 | 57 |
| Example 5 | 86.8% | 96.7% | 798 | 11.7 | 57 |
| Example 6 | 92.2% | 94.3% | 288 | 10.9 | 21 |
| Example 7 | 93.5% | 96.8% | 234 | 10.7 | 17 |
| Example 8 | 91.6% | 94.6% | 304 | 10.9 | 22 |
| Example 9 | 90.8% | 95.2% | 295 | 10.9 | 21 |
| Example 10 | 91.1% | 94.8% | 316 | 11 | 23 |
| Example 11 | 91.4% | 95.5% | 272 | 10.9 | 19 |
| Example 12 | 92.2% | 97.8% | 215 | 10.7 | 15 |
| Example 13 | 93.4% | 97.4% | 246 | 10.8 | 18 |
| Example 14 | 93.8% | 96.9% | 238 | 10.7 | 17 |
| Example 15 | 94.2% | 97.6% | 253 | 10.8 | 18 |
| Comparative Example 1 | 97.3% | 95.4% | / | / | / |
| Comparative Example 2 | 95.5% | 92.1% | / | / | / |
| Comparative Example 3 | 96.4% | 95.8% | 56,854 | / | 4,095 |
| Comparative Example 4 | 94.2% | 92.3% | 56,854 | / | 4,095 |
| Comparative Example 5 | 96.8% | 93.8% | 3,235 | 12.4 | 233 |
| Comparative Example 6 | 95.2% | 90.3% | 3,235 | 12.4 | 233 |
| Note: The surface alkalinity, residual lithium content, and pH values in Table 1 are results obtained from measurements of the lithium-supplementing additives. | | | | | |

It is well known in the field that the lower the initial coulombic efficiency, the more lithium is supplemented in the first cycle, indicating a better lithium supplementation effect. Additionally, a higher capacity retention rate suggests lower active lithium loss in the phosphate-based positive electrode main material, indicating a better lithium supplementation effect.

Thus, as shown in the table above, comparing Examples 1-4 with Comparative Example 1, the lithium-supplementing additive provided in the present application effectively improves the capacity retention rate of lithium-ion batteries. From Example 5, it can be understood that the lithium-supplementing additive provided in the present application is applicable to various positive electrode materials to enhance their cycling performance. From Examples 6-15, it can be seen that doping the surface layer of the lithium-supplementing additive with M and N elements effectively suppresses the dissolution of Fe and Mn elements in the bulk phase, preventing the destruction of the SEI film after Fe and Mn elements dissolve, thereby improving structural stability and enhancing cycling performance. Based on the effects observed in the examples and Comparative Examples 3-6, the lithium-supplementing additive provided in the present application contains lithium-containing compounds composed of two phases: $LiFe_\alpha Mn_\beta M_{1-\alpha-\beta}O_{2-\gamma}X_\gamma$ and $Li_2Fe_\delta Mn_\varepsilon N_{1-\delta-\varepsilon}O_{3-\eta}X_\eta$. The lithium-rich phase $Li_2Fe_\delta Mn_\varepsilon N_{1-\delta-\varepsilon}O_{3-\eta}X_\eta$, during the first charge at high voltage, exhibits a lower initial coulombic efficiency due to irreversible oxygen release and the unique controllable redox reversibility of $Fe^{3+}/Fe^{4+}$, providing more active lithium needed for the negative electrode. Meanwhile, the $LiFe_\alpha Mn_\beta M_{1-\alpha-\beta}O_{2-\gamma}X_\gamma$ phase, due to the unique controllable redox reversibility of $Fe^{3+}/Fe^{4+}$, not only provides part of the active lithium required by the negative electrode but also offers considerable reversible capacity. It also helps stabilize the structure of the lithium-rich phase. The combination of these two phases not only achieves excellent lithium supplementation effects but also allows the material itself to contribute capacity in subsequent cycles, reducing the decrease in energy density caused by the introduction of additives.

Moreover, as shown in the table above, from the examples and Comparative Examples 3-6, it can be seen that the lithium-supplementing additive provided in the present application has a very low residual lithium content on its surface due to the ratio of elements and the special two-phase structure of the material itself. This residual lithium content is two orders of magnitude lower compared to Comparative Examples 3 and 4, and one order of magnitude lower compared to Comparative Examples 5 and 6. Additionally, the pH values measured for the lithium-supplementing additives in the present application are generally below 12, whereas the pH values for the lithium-supplementing materials in Comparative Examples 3 and 4 are excessively high, exceeding the measurement range of the pH equipment. The pH values for Comparative Examples 5 and 6 are also above 12. High pH values and residual lithium content in the lithium-supplementing additive may lead to the material being prone to moisture absorption, resulting in poor stability of slurry, large viscosity fluctuations of slurry, and even a jelly-like consistency of slurry, which deteriorates flowability. Consequently, during drying, poor slurry flowability may cause significant fluctuations in coating surface density and even lead to cracking of electrode plates. Furthermore, the prepared electrode plates are also prone to moisture absorption and difficult to dry, which may lead to moisture reacting with the electrolyte after injection, worsening the electrochemical performance of the battery.

**Claims**

1. A lithium-supplementing additive, comprising a lithium-containing compound, wherein the lithium-containing compound is selected from a group consisting of compounds represented by the following chemical formula (I):

$$aLiFe_\alpha Mn_\beta M_{1-\alpha-\beta}O_{2-\gamma}X_\gamma \cdot (1-a)Li_2Fe_\delta Mn_\varepsilon N_{1-\delta-\varepsilon}O_{3-\eta}X_\eta \qquad (I);$$

   wherein M and N are each independently selected from a group consisting of Zr, Co, Sr, Al, Ni, W, Ti, Cu, Mg, Zn, Ca, Ba, Sc, Ga, Y, La, In, Ce, Ge, Hf, Sn, Nb, Ta, V, and Sb, and X is fluorine (F); $0.4 \le a \le 0.9$, $0 < \alpha \le 1$, $0 \le \beta \le 1$, $0 < (\alpha+\beta) \le 1$, $0 \le \gamma \le 0.1$, $0 < \delta \le 1$, $0 \le \varepsilon \le 1$, $0 < (\delta+\varepsilon) \le 1$, and $0 \le \eta \le 0.1$; and
   wherein the lithium-supplementing additive has a surface alkalinity of $10\ \mu mol \cdot g^{-1}$ to $400\ \mu mol \cdot g^{-1}$.

2. The lithium-supplementing additive according to claim 1, wherein in the chemical formula (I), $0 < \beta \le 1$, and $0 < \varepsilon \le 1$.

3. The lithium-supplementing additive according to claim 1, wherein in the chemical formula (I), $0 < \gamma \le 0.1$, and $0 < \eta \le 0.1$.

4. The lithium-supplementing additive according to any one of claims 1 to 3, wherein in the chemical formula (I), $0 < (\alpha+\beta) < 1$, and $0 < (\delta+\varepsilon) < 1$.

5. The lithium-supplementing additive according to claim 1, wherein the lithium-containing compound is selected from a group consisting of $0.8LiFe_{0.42}Mn_{0.58}O_2 \cdot 0.2Li_2Fe_{0.6}Mn_{0.4}O_3$, $0.6LiFe_{0.68}Mn_{0.31}Al_{0.01}O_2 \cdot 0.4Li_2Fe_{0.45}Mn_{0.54}A$-

$I_{0.01}O_3$, and $0.7LiFe_{0.55}Mn_{0.43}Co_{0.02}O_{1.95}F_{0.05} \cdot 0.3Li_2Fe_{0.33}Mn_{0.65}Co_{0.02}O_{2.95}F_{0.05}$.

6. The lithium-supplementing additive according to claim 1, wherein the lithium-containing compound has a volume median particle size ($D_V50$) of 500 nm to 8 $\mu$m; and/or
wherein the lithium-containing compound has a specific surface area of 0.5 $m^2/g$ to 20 $m^2/g$.

7. The lithium-supplementing additive according to claim 1, further comprising a coating layer on at least a portion of a surface of the lithium-containing compound, wherein the coating layer contains carbon.

8. The lithium-supplementing additive according to claim 7, wherein the carbon in the coating layer is derived from a carbon source, and the carbon source comprises at least one selected from a group consisting of starch, glucose, sucrose, polyethylene glycol, polyvinyl alcohol, and cyclodextrin.

9. The lithium-supplementing additive according to claim 7, wherein a content of the carbon coated on the surface of the lithium-containing compound ranges from 5,000 ppm to 50,000 ppm; and/or
wherein the coating layer has a thickness of 2 nm to 5 nm.

10. The lithium-supplementing additive according to claim 1 or 7, wherein the lithium-supplementing additive has a residual lithium content of 200 ppm to 4,000 ppm; and/or
wherein the lithium-supplementing additive has a pH of 10 to 12.

11. A method for preparing a lithium-supplementing additive, comprising the following steps:

preparing a precursor material using a spray pyrolysis treatment; and
mixing the precursor material with a lithium source and performing a calcination treatment to obtain a lithium-containing compound;
wherein the lithium-supplementing additive comprises a lithium-containing compound, and the lithium-containing compound is selected from a group consisting of compounds represented by the following chemical formula (I):

$$aLiFe_\alpha Mn_\beta M_{1-\alpha-\beta}O_{2-\gamma}X_\gamma \cdot (1-a)Li_2Fe_\delta Mn_\varepsilon N_{1-\delta-\varepsilon}O_{3-\eta}X_\eta \qquad (I);$$

wherein M and N are each independently selected from a group consisting of Zr, Co, Sr, Al, Ni, W, Ti, Cu, Mg, Zn, Ca, Ba, Sc, Ga, Y, La, In, Ce, Ge, Hf, Sn, Nb, Ta, V, and Sb, and X is fluorine (F); $0.4 \le a \le 0.9$, $0 < \alpha \le 1$, $0 \le \beta \le 1$, $0 < (\alpha+\beta) \le 1$, $0 \le \gamma \le 0.1$, $0 < \delta \le 1$, $0 \le \varepsilon \le 1$, $0 < (\delta+\varepsilon) \le 1$, and $0 \le \eta \le 0.1$.

12. The method for preparing the lithium-supplementing additive according to claim 11, wherein a method for preparing the precursor material comprises the following steps:

dissolving and mixing an iron source, a manganese source, an M source, an N source, and an X source in deionized water according to a stoichiometric ratio in the chemical formula (I), and adding a nucleation-promoting agent to obtain a mixed solution; and
performing a spray pyrolysis treatment on the mixed solution to obtain the precursor material.

13. The method for preparing the lithium-supplementing additive according to claim 12, wherein in the chemical formula (I), $0 < \beta \le 1$, $0 < \varepsilon \le 1$, and manganese ions in the mixed solution have a concentration of 0.01 mol/L to 2 mol/L.

14. The method for preparing the lithium-supplementing additive according to claim 11, wherein a molar ratio of the precursor material to the lithium source ranges from 1:1.1 to 1:1.6.

15. The method for preparing the lithium-supplementing additive according to claim 11, further comprising a step of adding a carbon source to form a coating layer containing carbon on a surface of the lithium-containing compound.

16. The method for preparing the lithium-supplementing additive according to claim 15, wherein a method for preparing the coating layer containing carbon comprises: mixing the lithium-containing compound with the carbon source, and then performing a high-temperature heat treatment under a protective atmosphere.

17. The method for preparing the lithium-supplementing additive according to claim 15, wherein a mass ratio of the lithium-supplementing additive to the carbon source is 1:(0.005-0.05).

**18.** A positive electrode material, comprising a positive electrode active material and the lithium-supplementing additive as claimed in any one of claims 1 to 10.

**19.** A positive electrode plate, comprising the positive electrode material as claimed in claim 18.

**20.** A battery, comprising the positive electrode plate as claimed in claim 19.

**XRD Pattern**

FIG. 1

## INTERNATIONAL SEARCH REPORT

| International application No. |
|---|
| **PCT/CN2023/137215** |

**A.    CLASSIFICATION OF SUBJECT MATTER**

H01M 4/505(2010.01)i;  H01M 4/525(2010.01)i;  H01M 4/485(2010.01)i;  H01M 4/62(2006.01)i;  H01M 4/131(2010.01)i;  H01M 10/052(2010.01)i;  H01M 10/42(2006.01)i;  C01G 49/00(2006.01)i;  C01G 51/00(2006.01)i;  C01B 32/15(2017.01)i;  B82Y 40/00(2011.01)i;  B82Y 30/00(2011.01)i

According to International Patent Classification (IPC) or to both national classification and IPC

**B.    FIELDS SEARCHED**

Minimum documentation searched (classification system followed by classification symbols)

IPC:H01M, C01G, C01B, B82Y

Documentation searched other than minimum documentation to the extent that such documents are included in the fields searched

Electronic data base consulted during the international search (name of data base and, where practicable, search terms used)

CNABS, CNTXT, CNKI, DWPI, ENTXT: 锂电池, 补充, 补锂, 磷酸盐, 磷酸锂铁, 喷雾热解法, lithium-ion battery, supplement +, phosphate, Li, Fe, Mn, O, Fe3+/Fe4+, spray pyrolysis

**C.    DOCUMENTS CONSIDERED TO BE RELEVANT**

| Category* | Citation of document, with indication, where appropriate, of the relevant passages | Relevant to claim No. |
|---|---|---|
| A | CN 111834618 A (SONGSHAN LAKE MATERIALS LABORATORY) 27 October 2020 (2020-10-27)<br>entire document | 1-20 |
| A | CN 114220951 A (HUIZHOU LIWINON NEW ENERGY TECHNOLOGY CO., LTD.) 22 March 2022 (2022-03-22)<br>entire document | 1-20 |
| A | CN 115133018 A (INSTITUTE OF CHEMISTRY, CHINESE ACADEMY OF SCIENCES) 30 September 2022 (2022-09-30)<br>entire document | 1-20 |
| A | CN 116666634 A (SHENZHEN DYNANONIC INNOVAZONE NEW ENERGY TECHNOLOGY CO., LTD.) 29 August 2023 (2023-08-29)<br>entire document | 1-20 |
| A | US 2009220860 A1 (BYD CO., LTD.) 03 September 2009 (2009-09-03)<br>entire document | 1-20 |

☑ Further documents are listed in the continuation of Box C.     ☑ See patent family annex.

| | | |
|---|---|---|
| *      Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family | |

| Date of the actual completion of the international search | Date of mailing of the international search report |
|---|---|
| **07 May 2024** | **30 May 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/137215**

| C. | DOCUMENTS CONSIDERED TO BE RELEVANT |  |
|---|---|---|
| Category* | Citation of document, with indication, where appropriate, of the relevant passages | Relevant to claim No. |
| A | WO 2023088133 A1 (SHENZHEN DYNANONIC INNOVAZONE NEW ENERGY TECHNOLOGY CO., LTD.) 25 May 2023 (2023-05-25) entire document | 1-20 |

**INTERNATIONAL SEARCH REPORT**
Information on patent family members

International application No.

**PCT/CN2023/137215**

| Patent document cited in search report | | | Publication date (day/month/year) | Patent family member(s) | | | Publication date (day/month/year) |
|---|---|---|---|---|---|---|---|
| CN | 111834618 | A | 27 October 2020 | None | | | |
| CN | 114220951 | A | 22 March 2022 | None | | | |
| CN | 115133018 | A | 30 September 2022 | None | | | |
| CN | 116666634 | A | 29 August 2023 | None | | | |
| US | 2009220860 | A1 | 03 September 2009 | US | 8052897 | B2 | 08 November 2011 |
| WO | 2023088133 | A1 | 25 May 2023 | None | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311281693